Europäisches Patentamt

European Patent Office

Office européen des brevets

(19)

(11) Veröffentlichungsnummer : **0 229 293 B1**

(12) **EUROPÄISCHE PATENTSCHRIFT**

(45) Veröffentlichungstag der Patentschrift :
05.04.89

(51) Int. Cl.⁴ : **C 07 F   9/53**

(21) Anmeldenummer : **86116874.8**

(22) Anmeldetag : **04.12.86**

(54) **Verfahren zur Herstellung von tertiären Phosphinoxiden.**

(30) Priorität : **13.12.85 DE 3544065**

(43) Veröffentlichungstag der Anmeldung :
**22.07.87 Patentblatt 87/30**

(45) Bekanntmachung des Hinweises auf die Patenterteilung : **05.04.89 Patentblatt 89/14**

(84) Benannte Vertragsstaaten :
**DE FR GB IT NL**

(56) Entgegenhaltungen :
**EP--A-- 0 049 342**
**EP--A-- 0 170 101**
**EP--A-- 0 216 205**
**CHEMISCHE BERICHTE, Band 108, Nr. 11, 1975,
letzter Absatz, S3; R. LUCKENBACH et al.: "Stereospezifische Überführung chiraler acyclischer tertiärer
Phosphinsulfide in die entsprechenden tertiären
Phosphinoxide mit Dimethylsulfoxid (DMSO)
TETRAHEDRON LETTERS, Band 21, Nr. 46, 1980,
Seiten 4421-4424; C.H. CHEN et al.: "A new phosphi-
ne-sulfides-to-phosphine-oxides exchange reaction"**

(73) Patentinhaber : **Röhm GmbH
Kirschenallee Postfach 4242
D-6100 Darmstadt 1 (DE)**

(72) Erfinder : **Knebel, Joachim, Dr.
Dieselstrasse 20
D-6100 Darmstadt (DE)**
Erfinder : **Ude,Werner, Dr.
Birngartenweg 115
D-6100 Darmstadt (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

EP 0 229 293 B1

EP 0 229 293 B1

## Beschreibung

### Gebiet der Erfindung

Die Erfindung betrifft ein Verfahren zur Herstellung von tertiären Phosphinoxiden. Phosphinoxide sind technisch interessante Verbindungen, die z. B. als Komplexliganden in der homogenen Katalyse oder als Monomere für die Herstellung schwer brennbarer, hoch wärmebeständiger Kunststoffe oder auch in Pestiziden Verwendung finden können.

### Stand der Technik

Für die Herstellung von tertiären Phosphinoxiden sind in Houben-Weyl, Methoden der organischen Chemie, 4. Auflage, Georg Thieme Verlag, Band XII/1 (1963), S. 135 ff und Band E 2 (1982), S. 41 ff, die bekannten Verfahren beschrieben. Präparative Bedeutung haben einmal Methoden, die von tertiären Phosphinen ausgehen, wobei mit Hilfe von Oxidationsmitteln direkt oder über tertiäre Phosphindihalogenide als Zwischenprodukte nach anschließender Hydrolyse mit Wasser oder wäßrigen Alkalien, die Phosphinoxidstruktur gebildet wird und zum anderen Methoden, ausgehend von tertiären Phosphinsulfiden, in denen der Schwefel mit Hilfe von Oxidationsmitteln gegen Sauerstoff ausgetauscht wird.

Für die Herstellung von phosphorhaltigen Polyarylenäthern z. B. nach DE-A 32 03 186 durch Polykondensation, werden funktionelle tertiäre Phosphinoxide, insbesondere Halogenarylphosphinoxide der Formel I

$$X - Ar - \overset{\overset{\displaystyle O}{\|}}{\underset{\underset{\displaystyle R}{|}}{P}} - Ar - X$$

worin Ar insbesondere Phenylen, X Halogen, insbesondere Fluor oder Chlor und R ein Alkyl- oder Arylrest oder auch Ar—X bedeutet eingesetzt. Solche Verbindungen bzw. die entsprechenden Phosphine als Vorstufen, lassen sich mit Hilfe der Grignard-Reaktion herstellen, wobei die Grignard-Reagenzien, wie z. B. 4-Chlorphenylmagnesiumbromid mit beispielsweise Alkyl- bzw. Aryl-dichlorphosphinoxiden der Alkyl- bzw. Aryl-dichlorphosphinen umgesetzt werden. Umsetzungen dieser Art sind in Mem. Fac. Eng., Osaka City Univ. 4, 173-5 (1962), Ref.: C.A. 59,8782, oder in Phosphorus 1974,5 (1), 43-45 und in US-A 4 101 655 beschrieben.

Die Grignard-Reaktion ist für die technische Herstellung von Halogenarylphosphinoxiden, bzw. entsprechender Phosphine als Vorstufen, einmal wegen des Einsatzes der teuren Grignard-Verbindungen und dann wegen der nicht einfachen Reaktionsführung, ungeeignet. Eine weitere interessante präparative Möglichkeit zur Herstellung von tertiären Phosphinoxiden, insbesondere solcher mit funktionellen Gruppen, läuft über die Stufen der tertiären Phosphinsulfide. Solche tertiären Phosphinsulfide sind nach Helv. 47, 120-132 (1964) durch Arylierung von $PSCl_3$, Thiophosphonsäuredihalogeniden und Thiophosphinsäurehalogeniden unter Friedel-Crafts Bedingungen leicht herstellbar. Für die Darstellung von Triorganylphosphinoxiden aus den zugehörigen Sulfiden sind zahlreiche Methoden bekannt. Sie erfolgt durch Reaktion mit Thionylchlorid über chlorierte Phosphorzwischenstufen (US-A 3 082 256) bzw. mit Alkalialkoholat-Halogen oder -Halogenverbindungen (GB-A 2 113 225), mit Dimethylsulfoxid in saurer Lösung (Synthesis 1973, 307), mit Polyphosphorsäure bzw. $P_2O_5$-Methansulfonsäure-Reagenz (Tetrahedron Lett. 1980, 21 (46), 4421-4), photolytisch in Gegenwart von N-Oxiden (Chem. Ind. (London) 1981, (10), 265-6), sowie mit starken Oxidationsmitteln wie Kaliumpermanganat, oder Salpetersäure (Am. Soc. 74, 4526 (1921)) oder Ozon (Synthesis 1983, (6), 509-10). Die technische Durchführung dieser Verfahren ist jedoch mit großen Nachteilen behaftet. So werden entweder toxische und/oder teure Reagenzien verwendet oder es fallen bei der Reaktion schwer zu entsorgende Beiprodukte an.

### Aufgabe und technische Lösung

Der Schwefel-Sauerstoff-Austausch in tert. Phosphinsulfiden hat bisher nur in Einzelfällen präparative Bedeutung, da, wie oben schon gesagt, tertiäre Phosphine vielfach schon mit Hilfe von Sauerstoff in die entsprechenden Phosphonoxide umgewandelt werden können. Diese vorteilhafte Methode versagt jedoch u. a. bei Triarylphosphinen, wie z. B. bei Tris-(halogenaryl)phosphinen, oder bei Bis-(halogenaryl)aryl- bzw. alkylphosphinen, die beispielsweise für die Herstellung schwer- bis unbrennbarer, hochtemperaturbeständiger Kunststoffe Interesse finden.

Der Erfindung liegt die Aufgabe zugrunde, aus Phosphinsulfiden und inbesondere aus Arylphosphinsulfiden, Phosphinoxide, wie sie z. B. zur Herstellung der phosphinoxidgruppenhaltigen Polymeren benötigt werden, in einem einfachen und mit billigen Reagenzien durchzuführenden Verfahren herzustellen.

Überraschenderweise wurde gefunden, daß die Umsetzung von tertiären Phosphinsulfiden allgemein,

2

mit Schwefelsäure oder organischen Sulfonsäuren allein, in der Wärme, in hohen Ausbeuten zu den gewünschten Phosphinoxiden führt. Die Reaktionsführung ist sehr einfach. Man löst das Phosphinsulfid, evtl. unter Erwärmen in der Säure und erhitzt das Gemisch bis zur vollständigen Umsetzung des Phosphinsulfids, die durch eine analytische Kontrolle, z. B. Dünnschichtchromatographie, verfolgt werden kann. Aus dem Umsetzungsgemisch wird dann, z. B. durch wässrig-extraktive Aufarbeitung, das Phosphinoxid isoliert.

Die tertiären Phosphinoxide fallen bei dem erfindungsgemäßen Verfahren schon als Rohprodukte mit Reinheiten von ca. 80-100 % und in Ausbeuten von ca. 80-100 % d. Th. an. Als Beiprodukte werden lediglich elementarer Schwefel bzw. Schwefeldioxid gebildet, die entweder abfiltriert bzw. durch Absorption, z. B. in Natronlauge, entfernt werden.

Vorteile der Erfindung

Die oxygenierende Desulfurierung von tertiären Phosphinsulfiden allein durch Schwefelsäure oder organische Sulfonsäuren, den organischen Derivaten der Schwefelsäure, ist überraschend, da nach dem Stand der Technik 50 %-ige wäßrige Schwefelsäure keinen Schwefel-Sauerstoffaustausch bei tertiären Phosphinsulfiden bewirkt, sondern nur Protonenlieferant für den Austausch mit dem Austauscherreagenz Dimethylsulfoxid ist (Synthesis 1973, 307), und Methansulfonsäure nach J. Org. Chem. 38, 4071 (1973) und eigenen Versuchen unter den angegebenen Bedingungen praktisch nur als Lösungsmittel für Phosphorpentoxid fungiert, das wie die als Austauschreagenz bekannte Polyphosphorsäure wirkt (Tetrahedron Lett. 1980, 21 (46), 4421-4).

Das erfindungsgemäße Verfahren gestattet es, Phosphinoxide aus Phosphinsulfiden herzustellen, ohne daß, wie bei den bekannten Verfahren mit stark oxidierenden Agentien, Nebenprodukte mitanfallen, die z. B. durch Oxidation aliphatischer Gruppen entstehen oder daß nitrierte Produkte und, wie im Falle des Arbeitens mit Thionylchlorid, Chlorphosphorane Ausbeute und Reinheit der Phosphinoxide deutlich vermindern. Schwefelsäure, aber auch die organischen Sulfonsäuren, wie Alkyl- und Arylsulfonsäuren, insbesondere Methan- und Toluolsulfonsäure, sind großtechnische Reagenzien, die relativ preiswert sind, was insbesondere auf die Schwefelsäure, als eines der preiswertesten chemischen Produkte überhaupt, zutrifft.

Die Erfindung ermöglicht bifunktionelle und trifunktionelle Halogenarylphosphinoxide, wie z. B. Bis-(chlorphenyl)methylphosphinoxid, Tris-(fluorphenyl) phosphinoxid, wie sie z. B. für die Herstellung von Polykondensationsprodukten benötigt werden, in hohen Ausbeuten und relativ preiswert herzustellen. Das erfindungsgemäße Verfahren gestattet aber ganz allgemein tertiäre Phosphinsulfide II, mit aliphatischen und/oder aromatischen Resten, die weiter noch substituiert sein können, in die entsprechenden tertiären Phosphinoxide III in hoher Ausbeute und hoher Reinheit in einfacher Weise entsprechend der folgenden Gleichung umzuwandeln :

$$ R_1 - \overset{\overset{S}{\|}}{\underset{\underset{R_3}{|}}{P}} - R_2 \quad \xrightarrow{\overset{H_2SO_4}{oder/und\ R-SO_3H}} \quad R_1 - \overset{\overset{O}{\|}}{\underset{\underset{R_3}{|}}{P}} - R_2 $$

(II)                 (III)

worin R = Alkyl mit 1 bis 6 Kohlenstoffatomen oder = Aryl, insbesondere Phenyl und Tolyl und

$R_1, R_2, R_3$ = Alkyl mit 1 bis 10 Kohlenstoffatomen, Cycloalkyl mit 5 bis 10 Kohlenstoffatomen, Aryl mit 6 bis 10 Kohlenstoffatomen, Aralkyl mit 7 bis 10 Kohlenstoffatomen, und die gleich oder verschieden sein können, sind, und die noch weitere Substituenten, z. B. Halogen, wie Fluor, Chlor, Brom, oder OR, worin R die oben angegebene Bedeutung hat, enthalten können.

Ausführung der Erfindung

Tertiäre Phosphinsulfide als Ausgangsverbindungen für die Durchführung des erfindungsgemäßen Verfahrens, lassen sich nach bekannten Methoden, wie sie zusammenfassend in Houben-Weyl, Methoden der organischen Chemie, 4. Auflage, Georg Thieme Verlag, Band E 2, S. 77 bis 91, beschrieben sind, herstellen. Besondere Bedeutung haben Verfahren, nach denen vorteilhaft Arylphosphinsulfide als Zwischenprodukte für die Herstellung der entsprechenden Phosphinoxide erhalten werden. So lassen sich Phosphorhalogensulfide, wie Dialkyl-, Alkyl-aryl- und Diarylthiophosphinsäurechloride oder Alkyl- und Arylthiophosphonsäure-dichloride oder Thiophosphorsäuretrichlorid unter Friedel-Crafts-Bedingungen nach der in Helv. 47 (1964), 120-132, beschriebenen Weise arylieren. Zur Arylierung können beispielsweise Benzol, Toluol, Fluorbenzol, Chlorbenzol, Brombenzol, Diphenyläther, Phenylaryläther eingesetzt werden. Als Friedel-Crafts-Katalysatoren für die Durchführung der Arylierung werden z. B. $C_2H_5AlCl_2$, $AlBr_3$ und vor allem $AlCl_3$ verwendet. Danach können auch Halogenarylphosphinsulfide hergestellt werden, die Zwischenprodukte zur Herstellung von Halogenarylphosphinoxiden der Struktur I sind. Weiter sind auf diese Weise Arylphosphinsulfide der Formel II und insbesondere Halogenarylphosphinsulfide zugänglich, die als weitere Substituenten Cycloalkylgruppen, insbesondere Cyclohexyl, oder Arylgruppen, insbesondere Phenyl und Tolyl, besitzen. Die erfindungsgemäß umzuwandelnden tertiären Thiophosphine können auch anderer Herkunft sein, z. B. aus der Umsetzung von Phosphorhalogensulfiden mit metallorganischen Verbindungen, wenn beispielsweise ein billiger Syntheseweg nicht zur gewünschten Verbindung führt.

Die als erfindungsgemäß einzusetzenden Schwefel-Sauerstoff-Austauschreagenzien sind Schwefelsäure und organische Derivate der Schwefelsäure, die sogenannten Sulfonsäuren. Schwefelsäure wird als 70 bis 100 %-ige Säure, vorteilhaft als 80 bis 100 %-ige Säure, insbesondere als handelsübliche, konzentrierte Schwefelsäure mit etwa 96 % Säuregehalt eingesetzt.

Von den organischen Derivaten der Schwefelsäure bewirken sowohl Alkansulfonsäuren als auch aromatische Sulfonsäuren die oxigenierende Desulfurierung von tertiären Phosphinsulfiden. Brauchbare Alkansulfonsäuren sind Methansulfonsäure, weiter Äthan-Propan-, Butan-, Pentan- und/oder Hexansulfonsäuren, wobei die Sulfonsäuregruppe bei den Verbindungen mit 3 und mehr Kohlenstoffatomen an verschiedenen C-Atomen der Alkylgruppe stehen kann. Diese Verbindungen haben Schmelzpunkte, die bei maximal + 20 Grad C liegen, und sind daher gut als Reaktionspartner mit Reaktionsmediumeigenschaften handhabbar.

Von den aromatischen Sulfonsäuren sind außer Benzolsulfonsäure beispielsweise die Toluolsulfonsäure, die vornehmlich als Isomerengemisch verwendet wird, weiter Xylolsulfonsäuren oder Chlorbenzolsulfonsäuren, wie 4-Chlorbenzolsulfonsäure, oder auch entsprechende Aryldisulfonsäuren als Schwefel-Sauerstoff-Austauschreagenzien einsetzbar. Die organischen Schwefelsäurederivate können auch gemeinsam mit der Schwefelsäure als Reaktionspartner eingesetzt werden. Das Verhältnis von tertiärem Phosphinsulfid zu Schwefelsäure bzw. Sulfonsäureverbindungen liegt normalerweise bei mindestens 1 : 1 bis 1 : 50 und vorteilhaft bei 1 : 2 bis 1 : 30 Mol/Mol. Die Umsetzung kann auch in Gegenwart inerter aprotischer Lösungsmittel, wie beispielsweise Methylenchlorid oder anderen fluor- bzw. chlorhaltigen aliphatischen oder aromatischen Kohlenwasserstoffen, wie z. B. 1,2-Dichlortetrafluoräthan oder Chlorbenzol, Cyclohexan, Methylcyclohexan, durchgeführt werden. Durch Erwärmen der Reaktionsgemische auf Temperaturen von 70 bis 250 Grad C, vorzugsweise auf Temperaturen von 110 bis 200 Grad C kann die Umsetzung beschleunigt werden. Bei der Reaktionsdurchführung ist normalerweise die Anwendung von Druck nicht notwendig. In geschlossenen Apparaturen kann sich jedoch ein von der Temperatur und den dann herrschenden Dampfdrucken der bei der Umsetzung vorhandenen Komponenten abhängiger Druck einstellen. Die Isolierung der Reaktionsprodukte geschieht beispielsweise durch Extraktion des mit Wasser verdünnten Reaktionsgemisches mit einem organischen Lösungsmittel wie z. B. Methylenchlorid.

## Beispiele

### 1. Darstellung von 4,4'-Difluortriphenylphosphinoxid

5 g (15 mmol) 4,4'-Difluortriphenylphosphinsulfid werden in 3 ml Wasser vorgelegt und unter Kühlen mit 28 ml (0,5 mol) $H_2SO_4$ (96 %) versetzt. Anschließend erhitzt man 4 Stunden auf 140-150 °C. Nach dem Abkühlen auf Raumtemperatur versetzt man den Ansatz mit 300 g Eis und extrahiert mehrmals mit Toluol. Man wäscht die Toluolanteile mit $Na_2CO_3$-Lösung und erhält nach Trocknen über $Na_2SO_4$ und Entfernen des Toluols im Vakuum 4 g gelblichen Feststoff (85 % d. Th.), der massenspektroskopisch als 4,4'-Difluortriphenylphosphinoxid identifiziert wird.

### 2. Darstellung von Bis(4-fluorphenyl) methylphosphinoxid

5 g (19 mmol) Bis(4-fluorphenyl) methylphosphinsulfid werden mit 15 ml (0,27 mol) $H_2SO_4$ (96 %) versetzt. Man erhitzt 2 Stunden auf 140-150 °C. Nach Aufarbeitung analog Beispiel 1 (Extraktionsmittel Dichlormethan) erhält man 4,5 g (94 % d. Th.) Bis (4-fluorphenyl)-methylphosphinoxid, das durch Massenspektroskopie identifiziert wird.

### 3. Darstellung von 4,4'-Dichlortriphenylphosphinoxid

5 g (14 mmol) 4,4'-Dichlortriphenylphosphinsulfid werden mit 15 ml (0,27 mol) $H_2SO_4$ (96 %) versetzt. Man erhitzt 4 Stunden auf 140-150 °C. Nach Aufarbeitung analog Beispiel 1 (Extraktionsmittel Dichlormethan) erhält man 4,3 g (88 % d. Th.) 4,4'-Dichlortriphenylphosphinoxid, das man massenspektroskopisch identifiziert.

### 4. Darstellung von Triphenylphosphinoxid

5 g (17,5 mmol) Triphenylphosphinsulfid werden mit 15 ml (0,27 mol) $H_2SO_4$ (96 %) versetzt. Man erhitzt 9 Stunden auf 140-150 °C. Nach Aufarbeitung analog Beispiel 2 erhält man 3,8 g Produkt, das nach flüssigkeitschromatographischer Untersuchung zu 80 % aus Triphenylphosphinoxid besteht.

4

EP 0 229 293 B1

5. Darstellung von Tris(4-chlorphenyl) phosphinoxid

5 g (13 mmol) Tris(4-chlorphenyl) phosphinsulfid werden mit 19 ml (0,34 mol) $H_2SO_4$ versetzt. Man erhitzt 4 Stunden auf 140-150 °C. Nach Aufarbeitung analog Beispiel 2 erhält man 4,5 g (90 %) Tris-(4-chlorphenyl) phosphinoxid. Die Identifizierung erfolgt durch Massenspektroskopie.

6. Darstellung von 4,4'-Difluortriphenylphosphinoxid

5 g (15 mmol) 4,4'-Difluortriphenylphosphinsulfid werden mit 10 ml (0,15 mol) Methansulfonsaure versetzt. Man erhitzt 17 Stunden auf 160 °C. Nach Aufarbeitung wie in Beispiel 2 erhält man 4,6 g (98 %) 4,4'-Difluortriphenylphosphinoxid mit einer gaschromatisch bestimmten Reinheit von 96 %.

7. Darstellung von Tri-n-butylphosphinoxid

5 g (21 mmol) Tri-n-butylphosphinsulfid werden mit 30 ml (0,54 mol) $H_2SO_4$ (96 %) versetzt. Man erhitzt 4 Stunden auf 140-150 °C. Nach Aufarbeitung analog Beispiel 2 erhält man 4,3 g Produkt, das nach GC zu 86 % aus Tri-n-butylphosphinoxid und 14 % aus Tri-n-butylphosphinsulfid besteht.

8. Darstellung von Dicyclohexylmethylphosphinoxid

3,66 g (15 mmol) Dicyclohexylmethylphosphinsulfid in 60 ml Toluol (Kp. : 110 °C) werden mit 34,4 g (0,2 mol) p-Toluolsulfonsäure 6 Stunden unter Rückfluß erhitzt. Danach wird wie in Beispiel 1 beschrieben aufgearbeitet. Es werden 3,0 g Feststoff erhalten, der massenspektroskopisch als Dicyclohexylmethylphosphinoxid identifiziert wird.

9. Darstellung von Triisoamylphosphinoxid

4,1 g (15 mmol) Triisoamylphosphinsulfid in 70 ml Chlorbenzol (Kp. : 132 °C) werden mit 34,7 g (0,18 mol) p-Chlorbenzolsulfonsäure versetzt und dann 8 Stunden auf Rückflußtemperatur erhitzt. Nach dem Abkühlen auf Raumtemperatur wird die Reaktionsmischung mehrmals mit je 80 ml Eiswasser extrahiert und dann die Chlorbenzollösung noch mit $Na_2CO_3$-Lösung gewaschen. Die Lösung wird mit $Na_2SO_4$ getrocknet und dann das Chlorbenzol im Vakuum entfernt. Ausbeute 3 g Feststoff, der massenspektroskopisch als Triisoamylphosphinoxid identifiziert wird.

10. Darstellung von Tri-p-tolylphosphinoxid

6,7 g (20 mmol) Tri-p-tolylphosphinsulfid in 100 ml Toluol (Kp. : 110 °C) werden mit 66,5 g (0,40 mol) n-Hexylsulfonsäure versetzt. Man erhitzt 8 Stunden auf Rückflußtemperatur. Nach der Aufarbeitung wie in Beispiel 9 erhält man 5 g Feststoff, der durch Massenspektroskopie als Tri-p-tolylphosphinoxid identifiziert wird.

11. Darstellung von Trimethylphosphinoxid

1,6 g (15 mmol) Trimethylphosphinsulfid in 50 ml Dichlormethan werden mit einem Gemisch aus 7,5 ml Schwefelsäure (96 %) und 10 ml Methansulfonsäure (0,15 mol) versetzt. Man erhitzt 10 Stunden im geschlossenen Gefäß auf 70 °C und arbeitet dann wie in Beispiel 9 beschrieben auf. Man gewinnt 1 g Trimethylphosphinoxid, das massenspektroskopisch identifiziert wird.

**Patentansprüche**

1. Verfahren zur Herstellung von tertiären Phosphinoxiden durch Umsetzung der entsprechenden tertiären Phosphinsulfide mit Schwefel-Sauerstoff-Austauschreagenzien, dadurch gekennzeichnet, daß die tertiären Phosphinsulfide bei Temperaturen von 70 bis 250 Grad C mit mindestens 1 Mol 70-100 %-iger Schwefelsäure, aliphatischen Sulfonsäuren mit 1 bis 6 Kohlenstoffatomen, aromatischen Sulfonsäuren oder Gemischen dieser Säuren pro Mol tertiärem Phosphinsulfid umgesetzt werden.

2. Verfahren nach Anspruch 1, dadurch gekennzeichnet, daß die Umsetzung mit Schwefelsäure durchgeführt wird.

3. Verfahren nach Anspruch 1, dadurch gekennzeichnet, daß die Umsetzung mit organischen Sulfonsäuren durchgeführt wird.

4. Verfahren nach Anspruch 1, dadurch gekennzeichnet, daß die Umsetzung mit Schwefelsäure-Sulfonsäure-Gemischen durchgeführt wird.

5. Verfahren nach den Ansprüchen 1, 2, und 4, dadurch gekennzeichnet, daß die Umsetzung mit 80-100 %-iger Schwefelsäure durchgeführt wird.

6. Verfahren nach den Ansprüchen 1, 2, 4 und 5, dadurch gekennzeichnet, daß die Umsetzung mit konzentrierter Schwefelsäure durchgeführt wird.

7. Verfahren nach den Ansprüchen 1 und 3 bis 6, dadurch gekennzeichnet, daß die Umsetzung in Gegenwart von aliphatischen Sulfonsäuren mit 1 bis 6 Kohlenstoffatomen durchgeführt wird.

8. Verfahren nach den Ansprüchen 1 und 3 bis 6, dadurch gekennzeichnet, daß die Umsetzung in Gegenwart von aromatischen Sulfonsäuren durchgeführt wird.

9. Verfahren nach den Ansprüchen 1 bis 8, dadurch gekennzeichnet, daß die Umsetzung in Gegenwart von 1 bis 50 Mol, und vorteilhaft in Gegenwart von 2 bis 30 Mol Schwefelsäure bzw. Sulfonsäure pro Mol tertiärem Phosphinsulfid durchgeführt wird.

10. Verfahren nach den Ansprüchen 1 bis 9, dadurch gekennzeichnet, daß die Umsetzung bei Temperaturen von 110 bis 200 Grad C durchgeführt wird.

11. Verfahren nach den Ansprüchen 1 bis 10, dadurch gekennzeichnet, daß die Umsetzung in Gegenwart inerter aprotischer Lösungsmittel durchgeführt wird.

**Claims**

1. Process for preparing tertiary phospine oxides by reacting the corresponding tertiary phosphine sulphides with sulphur-oxygen exchange reagents, characterised in that the tertiary phosphine sulphides are reacted at temperatures of from 70 to 250 °C with at least one mole of 70 to 100 % sulphuric acid, aliphatic sulphonic acids with 1 to 6 carbon atoms, aromatic sulphonic acids or mixtures of these acids for each mole of tertiary phosphine sulphide.

2. Process as claimed in claim 1, characterised in that the reaction is carried out with sulphuric acid.

3. Process as claimed in claim 1, characterised in that the reaction is carried out with organic sulphonic acids.

4. Process as claimed in claim 1, characterised in that the reaction is carried out with mixtures of sulphuric and sulphonic acid.

5. Process as claimed in claims 1, 2 and 4, characterised in that the reaction is carried out with 80 to 100 % sulphuric acid.

6. Process as claimed in claims 1, 2, 4 and 5, characterised in that the reaction is carried out with concentrated sulphuric acid.

7. Process as claimed in claims 1 and 3 to 6, characterised in that the reaction is carried out in the presence of aliphatic sulphonic acids with 1 to 6 carbon atoms.

8. Process as claimed in claims 1 and 3 to 6, characterised in that the reaction is carried out in the presence of aromatic sulphonic acids.

9. Process as claimed in claims 1 to 8, characterised in that the reaction is carried out in the presence of 1 to 50 mole and advantageously in the presence of 2 to 30 mole of sulphuric acid or sulphonic acid per mole of tertiary phosphine sulphide.

10. Process as claimed in claims 1 to 9, characterised in that the reaction is carried out at temperatures from 110 to 200 °C.

11. Process as claimed in claims 1 to 10, characterised in that the reaction is carried out in the presence of inert aprotic solvents.

**Revendications**

1. Procédé de préparation d'oxydes de phosphines tertiaires par réaction des sulfures de phosphines tertiaires correspondants avec des réactifs d'échange soufre/oxygène, caractérisé en ce que les sulfures de phosphines tertiaires sont mis en réaction, à des températures de 70 à 250 °C, avec au moins 1 mol d'acide sulfurique à 70-100 %, d'acides sulfoniques aliphatiques à 1-6 atomes de carbone, d'acides sulfoniques aromatiques ou de mélanges de ces acides par mol de sulfure de phosphine tertiaire.

2. Procédé selon la revendication 1, caractérisé en ce que la réaction est conduite avec de l'acide sulfurique.

3. Procédé selon la revendication 1, caractérisé en ce que la réaction est conduite avec des acides sulfoniques organiques.

4. Procédé selon la revendication 1, caractérisé en ce que la réaction est conduite avec des mélanges acide sulfurique/acide sulfonique.

5. Procédé selon l'une quelconque des revendications 1, 2 et 4, caractérisé en ce que la réaction est conduite avec un acide sulfurique à 80-100 %.

6. Procédé selon l'une quelconque des revendications 1, 2, 4 et 5, caractérisé en ce que la réaction est conduite avec de l'acide sulfurique concentré.

7. Procédé selon l'une quelconque des revendications 1 et 3 à 6, caractérisé en ce que la réaction est conduite en présence d'acides sulfoniques aliphatiques à 1-6 atomes de carbone.

8. Procédé selon l'une quelconque des revendications 1 et 3 à 6, caractérisé en ce que la réaction est conduite en présence d'acides sulfoniques aromatiques.

9. Procédé selon l'une quelconque des revendications 1 à 8, caractérisé en ce que la réaction est conduite en présence de 1 à 50 mol, de préférence en présence de 2 à 30 mol d'acide sulfurique ou d'acide sulfonique par mol de sulfure de phosphine tertiaire.

10. Procédé selon l'une quelconque des revendications 1 à 9, caractérisé en ce que la réaction est conduite à des températures de 110 à 200 °C.

11. Procédé selon l'une quelconque des revendications 1 à 10, caractérisé en ce que la réaction est conduite en présence de solvants aprotiques inertes.

7